# EUROPEAN PATENT APPLICATION

(11) **EP 2 961 183 A1**
(43) Date of publication of application: **30.12.2015**
(21) Application number: 14306020.0
(22) Date of filing: 27.06.2014
(51) Int. Cl.: H04N 21/4728, H04N 21/218, H04N 21/2343, H04N 21/6587

(54) **Method, system and related selection device for navigating in ultra high resolution video content**

(71) Applicant: Alcatel Lucent, 92100 Boulogne-Billancourt (FR)
(72) Inventor: Rondão Alface, Patrice, 2018 Antwerpen (BE); Macq, Jean-François, 2018 Antwerpen (BE); Verzijp, Nico, 2018 Antwerpen (BE)
(74) Representative: ALU Antw Patent Attorneys

(57) **Abstract**

The present invention relates to a method, system and related devices for navigating in ultra high resolution video content under control of a user navigation command originating from a client device, at least portions of the ultra high resolution video content being transmitted from a server towards said client device, where said method comprises the steps of receiving a user navigation command, said user navigation command indicating a navigation trajectory through said ultra high resolution video content and determining a local video saliency on said navigation selection trajectory by analyzing said ultra high resolution video content on said navigation trajectory through said ultra high resolution video content and
adapting characteristics of said navigation selection trajectory in function of said local video saliency on said navigation selection trajectory.

## Description

### FIELD OF THE INVENTION

The present invention relates to the field of navigating in ultra high resolution video content under control of a client device.

### TECHNICAL BACKGROUND OF THE INVENTION

In current interactive high resolution video consumption applications where the user is able to navigate in this video content using Pan-Tilt-Zoom (PTZ) commands at e.g. a mobile device (such as Zoomable Videos, FascinatE project etc), users are able to define by a few interactions the position and zoom level of their preferred field-of-view at a certain time t. Moreover, typically, a user is able to navigate in the panoramic or high resolution video content that is available remotely in the network but whose resolution is too large to be displayed entirely on the user device. The user can then zoom in the content and track moving objects in the video. This means, that for panoramic content, the user may select a portion of the high resolution content and only watch this selected portion, but alternatively he may also move this field of view so as to follow or track a spatial portion of the high resolution video content, such as a portion containing the user's favourite soccer player or containing the ball.

Further, such high spatial-resolution video, also referred to as Ultra High Definition video, is becoming more and more common. This type of content ranges from High Resolution, hereafter abbreviated with HD, video with 1920x1080 pixels per frame to higher resolution video either directly acquired with advanced optics and image sensors or obtained from stitched views from multiple cameras. In such interactive high resolution video applications, it has been observed that interactions for selecting a certain portion of the high resolution video content, although very much appreciated, are not easy to perform. For instance, in case of moving content, such as a ball in a soccer game, while it is easy to zoom in static portions of the content such as some part of the field or some part of the tribunes, where the user intends to track a given player or the ball, this user perceives the interactions for selecting the meant portion of the high resolution video content to be tedious and cumbersome after some time, due to the interaction delay or the sensitivity of the interactions in respect to the speed and trajectory of the desired (fast) moving object or person.

### SUMMARY OF THE INVENTION

An objective of embodiments of the present invention is to provide with a method, a system and related devices for navigating in ultra high resolution video content under control of a client device of the known type, but wherein the aforementioned shortcoming or drawbacks of the known solutions are alleviated or overcome.

According to an aspect of the invention, there is provided a method for navigating in ultra high resolution video content under control of a client device user navigation command, said method comprising the steps of receiving a user navigation command, said user navigation command indicating a navigation selection trajectory through, e.g. a frame of, said ultra high resolution video content towards a navigation goal of a user of said client device and determining a local video saliency on said navigation selection trajectory by analyzing said ultra high resolution video content on said navigation selection trajectory through said ultra high resolution video content and adapting characteristics of said navigation selection trajectory in function of said local video saliency on said navigation selection trajectory.

Still further embodiments of the present invention relate to a system for navigating in ultra high resolution video content under control of a user navigation command originating from a client device, at least portions of said ultra high resolution video content being transmitted from a server towards said client device, wherein said system comprises:
- a reception means, configured to receive said user navigation command, said user navigation command indicating a navigation trajectory through said ultra high resolution video content ; and
- a video saliency determination means, configured to determine a local video saliency on said navigation selection trajectory by analyzing said ultra high resolution video content on said navigation trajectory through said ultra high resolution video content; and
- a characteristics adaption means, configured to adapt characteristics of said navigation selection trajectory in function of said local video saliency on said navigation selection trajectory.

Another embodiment of the present invention relates to a Selection Device for use in a system according to claim 7, wherein said selection device is configured to support navigating in ultra high resolution video content under control of said user navigation command originating from said client device, said selection device comprises:
- Reception means, configured to receive said user navigation command, said user navigation command indicating a navigation trajectory through said ultra high resolution video content ; and
- Video saliency determination means, configured to determine a local video saliency on said navigation selection trajectory by analyzing said ultra high resolution video content on said navigation trajectory through said ultra high resolution video content; and
- Characteristics adaption means, configured to adapt characteristics of said navigation selection trajectory in function of said local video saliency on said navigation selection trajectory.

The present invention relates to a Server for transmitting at least portions of ultra high resolution video content towards a client device, for use in a system according to claim 7, wherein said server comprises a selection device according to claim 8.

The present invention relates to a Network element for use in a system according to claim 7, wherein said network element is coupled to said server and or said client device wherein said network element comprises a selection device according to claim 8.

Finally, the present invention relates to a Computer program product comprising software adapted to perform the method steps according to any of claim 1 to 7 when executed on a data processing apparatus.

In this way, optionally by a server, at receiving of a user navigation command, where the user navigation command indicates a navigation selection trajectory through, e.g. a frame of, said ultra high resolution video content in direction of a navigation goal of a user of the client device, a local video saliency on the navigation selection trajectory is determined by analyzing said ultra high resolution video content on the navigation selection trajectory through the ultra high resolution video content and subsequently, in function of the determined local video saliency on said navigation selection trajectory, characteristics of the navigation selection trajectory are adapted in such manner that the navigation selection trajectory characteristics better matches the navigation goals of a user of the client device.

The local video saliency can be determined in a continuous mode, that is, be determined for, e.g. each frame of the content, hence the processing may be performed at the e.g. same rate as the frame rate of the ultra high resolution video content or be determined at a restricted number of discrete moments that is, the saliency may be determined at a lower rate than the frame rate, so for every N frames of the content, e.g.; every 5 frames for a 120 frames per second content.

Determining local video saliency at a lower frame rate than the ultra high resolution video content may be motivated by the fact that the client device cannot display video frames at the same frame rate as the input content (some sports content can be available in 120 fps or even 300 fps, while tablet PCs can typically only decode 25 to 60fps).

The user navigation command, such as a PTZ command, in view of a current location or starting point of the navigation command indicates a navigation selection trajectory, such as a path through ,e.g. a frame of, the ultra high resolution video content in direction of the navigation goal of a user of such client device envisions. The current location or starting point of the navigation trajectory is determined based on or in view of the, at least part of said ultra high resolution video content being transmitted from said server towards said client device and rendered at said client device CD.

In order to improve the navigation along the meant navigation selection trajectory, the ultra high resolution video content is analyzed for determining the local video saliency on this navigation selection trajectory. The local video saliency is a measure for the amount of detail present at the navigation selection trajectory in such video.

Such a low local video saliency, a moderate local video saliency or a high local video saliency respectively signify a low amount of detail in the video, such as the blue sky, uniformly painted walls, road, etc., a moderate amount of detail such as a statistically uniform texture but rough (high frequency content, e.g. vegetation, grass, tree's leaves, some texture patterns for carpets, curtains, roofs etc) or a high degree of video saliency such as either spatially salient or salient due to its motion; e.g. people, faces, soccer ball etc.

Subsequently, in function of the determined local video saliency the characteristics of the navigation selection trajectory may be adapted to better match matches the navigation goals of a user of the client device.

In an embodiment of the present invention, the navigation selection trajectory can be traversed at an adapted velocity that optimum suits the level of detail in the video at the analyzed location at the navigation selection trajectory through the video content.

The navigation trajectory may be traversed at a standard velocity but advantageously additionally in an accelerated velocity or at a decelerated velocity in the respective situation of a low local video saliency, i.e. in case relatively little change in video information such as a blue sky, uniformly painted walls, road, etc. on the navigation selection trajectory, or in case of relatively high local video saliency , i.e. very much change in video information such as such as objects either spatially salient or salient due to its motion like e.g. people, faces, soccer ball etc. on the navigation selection trajectory.

A further embodiment of the present invention relates to a method for navigating in ultra high resolution video content according to claim 1, wherein in case of a low local video saliency on said navigation trajectory through said ultra high resolution video content, a navigation speed is increased, in case of a high local video saliency on said navigation trajectory through said ultra high resolution video content a navigation speed is decreased.

The navigation selection trajectory may comprise zooming in /out interactions or combinations of zooming and panning or tilting where, in case of zooming, the average saliency of the selection typically varies and the speed of zooming in or zooming out may be accelerated or decelerated in the respective situation of an average low local video saliency on the current selection or high local video saliency in the current selection, respectively.

Due to the fact that the ultra high resolution video content on the navigation selection trajectory is analyzed, the local video saliency may be determined by pixel-level analysis such as the density of edges (using classical Canny, Sobel, Prewitt etc operators, or more advanced image processing algorithms based on multi-scale or multi-resolution filter banks such discrete wavelets, Gabor filters, Haar wavelet, oriented spectral filters (i.e. designed based on a Fast Fourier Transform)), or feature point detectors or texture analysis algorithms.

In order to quantify the importance of saliency, the measured responses to the analysis filters cited previously, a switching point must be set between relatively low and relatively high saliency values, which typically this is done via kurtosis estimation or by means of pre-defined value ranges adapted to the type of ultra high resolution video content, see: Borji, A., Sihite, D. N., & Itti, L. (2013). Quantitative analysis of human-model agreement in visual saliency modeling: A comparative study. Image Processing, IEEE Transactions on, 22(1), 55-69 which is include by reference.
Another embodiment of the present invention relates to a method for navigating in ultra high resolution video content according to claim 1, wherein said characteristics of said navigation selection trajectory comprise navigation speed and direction.

The characteristics of said navigation selection trajectory comprise navigation speed and direction.

An embodiment of the present invention relates to a method for navigating in ultra high resolution video content according to claim 1, wherein said analyzing said ultra high resolution video content on said navigation trajectory through said ultra high resolution video content comprises counting edge transitions on said navigation trajectory.

The analyzing of said ultra high resolution video content on said navigation trajectory through said ultra high resolution video content may comprise counting edge transitions on said navigation trajectory.

By determining the number of edge transitions on said navigation trajectory a degree of variance of the video on the meant trajectory is determined as in case only little number of edge transitions occur, very few changes in the video are present which is for instance the case in blue sky, uniformly painted walls, road, etc.

On the other hand, in case very high number of changes occur, many changes in the video are present which is for instance the situation in vegetation (trees, grass, flowers, etc.), crowds of people, moving or static object boundaries, fireworks in the night etc.

Depending on the algorithm used for measuring saliency used, higher values of saliency could be measured for high variations that are known to be semantically more interesting.

For example, the use of a face detection algorithm combined with a measure of edge variations would give a higher saliency for a person's face or faces in a crowd than for the leaves of a tree (although the leaves might have more variations in terms of pixel intensity). Furthermore, saliency can also integrate temporal aspects, that is, high variations can also occur in terms of motion (objects moving with wind, running people, rolling ball) in contrast with low variations in terms of motion (typically static objects, regions). Here again, the saliency measure could integrate a measure of semantic interest, by e.g. providing lower saliency values for temporally periodic motion (waves, wind, water falling) than for the motion of an object that is specific to a period of time (ball rolling in one direction, player changing direction, etc).

Still another embodiment of the present invention relates to a method for navigating in ultra high resolution video content according to claim 1, wherein said analyzing said ultra high resolution video content on said navigation trajectory through said ultra high resolution video content comprises determining transitions or the variance of luminance content on said navigation trajectory.

The analyzing of said ultra high resolution video content on said navigation trajectory through said ultra high resolution video content comprises determining transitions or the variance of luminance content on said navigation selection trajectory.

By determining the number of transitions in the variance of the luminance on the navigation selection trajectory the saliency is determined as in case of as in case only little number of luminance transitions occur very few changes in the video are present which is for instance the case in blue sky, uniformly painted walls, road, etc.

An additional embodiment of the present invention relates to a method according to claim 1, wherein said navigation selection command comprises a Pan-Tilt-Zoom command.

The method according to the present invention the navigation command comprises a Pan-Tilt- Zoom command. The navigation command may include Pan-Tilt-Zoom (PTZ) commands originating from a client device.

The navigation command in view of the at least part of said ultra high resolution video content, being transmitted from said server towards said client device entails that the navigation command, i.e. the PTZ command, is related to the current transmitted and presented video content and that the navigation and or /selection action corresponding to the PTZ command is performed on the video content currently being transmitted and played out.

A further embodiment relates to a method according to claim 1, wherein said navigation selection command comprises content's reference coordinates.

In another embodiment, the method according to the present invention the navigation command comprises a command including content's reference coordinates where each such coordinate points to a single pixel in the ultra high resolution video content. The navigation command may include content's reference coordinates originating from a client device of user where the user intends to indicate a certain element of at least part of the ultra high resolution video content.

It is to be noted that the described functional means of the system may be distributed over the first communications device and/or one or more further network elements such as a server device as described in the further appended claims.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents the functional structure of a system for navigating in ultra high video content, wherein said system comprises a client device CD and a Server S according to an embodiment of the present invention; and
Fig. 2 represents a functional representation of device SD according to an embodiment of the present invention; and
Fig. 3 represents the functional structure of a system for navigating in ultra high video content, wherein the selection device is included in a client device CD.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

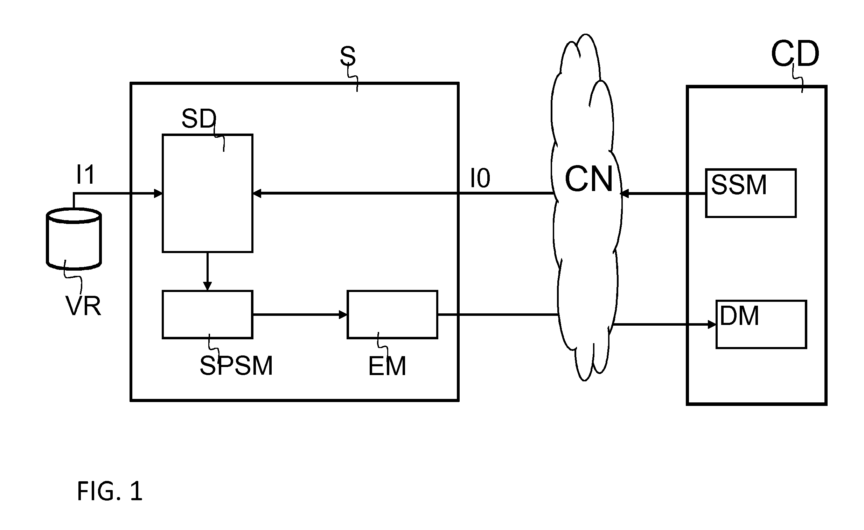

In the following paragraphs, referring to the drawing in FIG.1, an implementation of the system for navigating in ultra high resolution video content under control of a user navigation command originating from a client device CD, where at least portions of the ultra high resolution video content being transmitted from a server S towards the client device CD, is described. Subsequently all relevant functional means of the mentioned client device CD and server S of this system as presented in FIG.1 are described followed by a description of all interconnections.

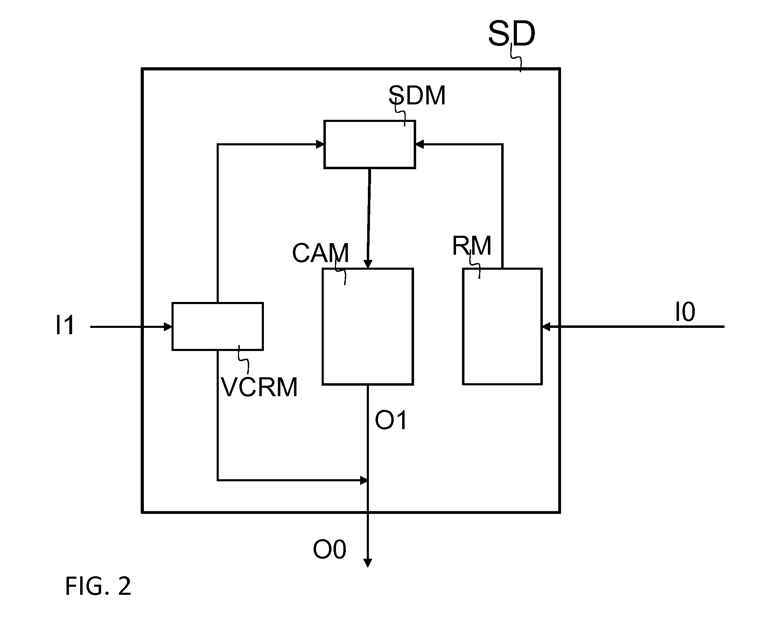

In subsequent paragraphs, referring to the drawing in FIG.2, an implementation of a device SD being configured to support the navigating in ultra high resolution video content under control of a client device according to an embodiment of the present invention is described. Subsequently all relevant functional means of device SD of the system as presented in FIG. 1 are described followed by a description of all interconnections.

In the succeeding paragraph the actual execution of the system is described.

A first essential element of the system is a server S that is configured to transmit ultra high resolution video content from a video repository included in - or coupled to the server S towards a client device CD.

The transmitting of the ultra high resolution video content by the server S may be streaming or more generally transmitting by means of any suitable video transport protocol of this video content towards at least one client device CD of a plurality of client devices.

The server S may be an element of a content cluster or service node in a multimedia content delivery network (see http://en.wikipedia.org/wiki/Content delivery network).

The server may be a server in content delivery network or alternatively be a virtualization of the server functionality in a cloud environment, or a process distributed over several devices, or a GPU farm etc.

The client device CD in turn is configured to receive the ultra high resolution video content transmitted by the server S.

The client device CD may be an IP connected computer terminal being equipped with a screen and a set of speakers for rendering a multimedia asset streamed by the server S towards the client device CD, or an IPTV connected television set coupled via a set-top box to the internet, where this device again is equipped with a screen with a set of speakers for rendering a multimedia asset streamed, or alternatively may be a connected television, a tablet PC, other PC such as a fixed PC or laptop PC, smart phone, a TV connected to a Kinect sensor and/or to a gamepad or joystick, or a gaming console etc.

The server S and client device CD may be coupled over any suitable communications network CN optionally containing a concatenation of an access network such as a digital subscriber line access network with coupled DSL modems or a cable network, a mobile communication access network with connected Smartphone or tablet devices or other suitable communications network and core internet network etc.

In this embodiment the video content repository VR is coupled to the server S over any kind of high speed reliable connection (due to the high resolution content, such connection would preferably be optical fibre technology or Ethernet cable). The content of the VR could also be cached on high speed access SSD drives on the server.

It is to be noted that although such system usually comprises a plurality of such client devices for reasons of simplicity only client device CD is disclosed.

A first essential means of the server S is the selection device SD that is configured to support navigating through the ultra high resolution video content, based on the navigation command of the client device CD in view of at least part of said ultra high resolution video content being transmitted, optionally from said server S, towards said client device CD. The server S further comprises a selection means SPSM that is configured to select said spatial portion from said ultra high resolution video content, based on the navigation command in view of at least part of said ultra high resolution video content being transmitted (from said server S) towards said client device CD in combination with content data pertaining to said ultra high resolution video content. Furthermore, the encoding means EM that is configured to encode the selected spatial portion of the ultra high resolution video content in a format that is suitable for the client device CD for playing out of the selected spatial portion.

The server S may include a video content repository VR that is adapted to maintain a plurality of ultra high resolution video content assets for transmittal to a client device CD. The video content repository VR alternatively may be accommodated in another network element and be coupled to the server S.

The selection device SD, that optionally may be included in the server S, comprises a video content reception means VCRM that is configured to obtain said ultra high resolution video content

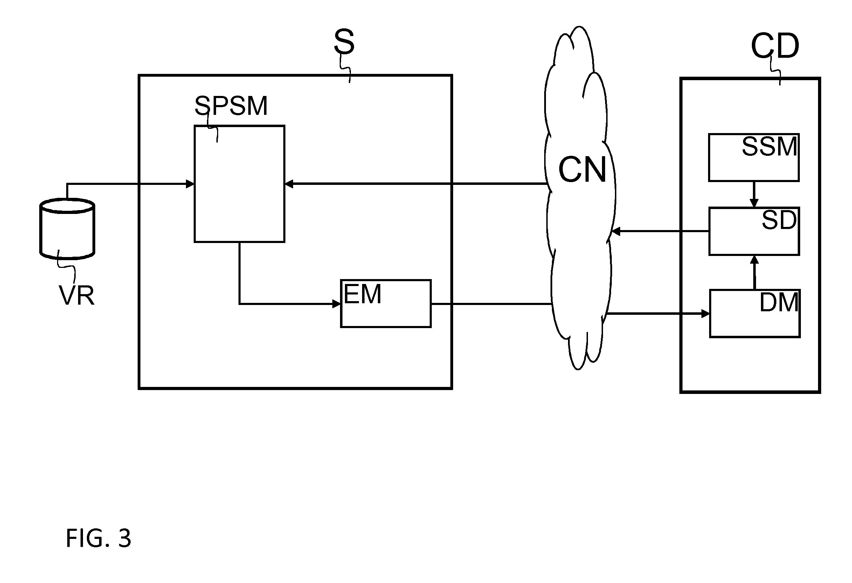

Further, the selection device SD may comprise a Reception means RM that is configured to receive the user navigation command where the user navigation command indicates a navigation trajectory through the ultra high resolution video content and a Video saliency determination means SDM that is configured to determine a local video saliency on the navigation selection trajectory by analyzing the ultra high resolution video content on the navigation trajectory through the ultra high resolution video content and a Characteristics adaption means CAM that is configured to adapt characteristics of the navigation selection trajectory in function of said local video saliency on said navigation selection trajectory. It is to be noted that the selection device SD, alternatively may be a separate network element or may be included in another network element such as a core network element or could even be located at the client device, or happen to be located close the client device, such as at a set-top-box, meaning that the local saliency determination could be performed at the client device rather than performing this determination at the server S. The adaptation of the command could then also happen at the device, the Server would then simply send the spatial portion selection as requested. The selection device SD located at the client device CD would simply send user commands (adapted based on saliency) to the server and the server would send back the selected portion encoded as a video which situation is illustrated in FIG 3.

The reception means RM of the selection device SD is coupled with an output to an input of the saliency determination means SDM and further has an input-terminal that is at the same time an input-terminal 10 of the selection device SD. The saliency determination means SDM of the device SD further is coupled with an output to an input of the characteristics adaption means CAM and has an input-terminal that is coupled to an output-terminal of the video content reception means VCRM. The video content reception means VCRM further comprises an input-terminal that is at the same time an input-terminal I1 of the selection device SD and an additional output that is the same time an output-terminal O0 of the selection device SD. The characteristics adaption means CAM further has an output-terminal that is the same time an output-terminal O0 of the selection device SD.

The client device CD comprises a spatial portion selection means SSM_that is configured to make a selection of a spatial portion of said ultra high resolution video content for transmitting towards the client device.

The selection is performed by generating user navigation commands, e.g. Pan-Tilt-Zoom (PTZ) commands at the client device, which generating is performed under control of the user of such client device that is enabled to make selection of the ultra high resolution video content currently being transmitted towards the client device CD and be presented at the display of such client device CD.

The user navigation commands, i.e. the Pan-Tilt-Zoom (PTZ) commands and client status, i.e. the spatial portion of said ultra high resolution video content currently transmitted towards said client device CD for current rendering are obtained by the portion selection means SSM and link relative commands sent by the client in content's reference coordinates, the content's reference coordinates being the location within a currently displayed frame of the ultra high resolution video content. The reference coordinate system of the ultra high resolution video content typically associates one pair of 2D (x,y) integer coordinates to each pixel of the ultra high resolution video content, we therefore have a bijection between pixels of the content and pairs of integer coordinates in the reference coordinate system.

The computation of the content's reference coordinates from user interactions in the reference coordinate system does not need to be pixel-accurate; relative motion with a given speed will be translated into a new content's reference coordinate position in the content's reference coordinate system by the client portion selection means SSM with an error tolerance that can be parameterized, typically in case the estimated coordinates would lead to sub-pixel positions (that is non-integer coordinates in the reference coordinate system), a casting to the nearest pixel position (and hence integer coordinates) will be implemented.

The client device CD further comprises decoding means DM that is configured to decode the received selected spatial portion from said ultra high resolution video content, based on said selection information in view of at least part of said ultra high resolution video content being transmitted, optionally from said server S, towards said client device CD in combination with content data pertaining to said ultra high resolution video content.

The client device CD further at least comprises a display and/or speakers for presenting the received selected spatial portion from said ultra high resolution video content and additionally available sound.

The client device CD additionally comprises means for selecting a spatial portion of the currently transmitted ultra high resolution video content. Such selection means may be a touch-screen, a mouse coupled to the client device, a gesture sensor or any other sensor for detecting Pan-Tilt-Zoom (PTZ) instructions of the user of the client device CD.

In order to explain the present invention first it is assumed that a user currently is watching a certain soccer game at a tablet or at the screen of an IPTV system. The corresponding ultra high resolution video content is being transmitted, by means of streaming, from the server S towards the client device CD. The user at a certain moment of time wishes to track the ball by applying PTZ commands. The user generates these PTZ commands by means of touching the (touch-) screen of the tablet PC or by making gestures which are detected by dedicated gesture sensors like a camera on the tablet with the necessary gesture detection and recognition processing, or by means of the accelerometer sensor that could be present on the tablet, or audio/speech commands.

In the prior art situation this selecting of spatial portions of the video for tracking an object such as the ball with the player touching the ball is although very much appreciated, not easy to perform. The user perceives the interactions for selecting the meant portion of the high resolution video content to be tedious and cumbersome after some times, due to the interaction delay or the sensitivity of the interactions in respect to the speed and trajectory of the desired (fast) moving object or person.

In the situation, of the present invention however the user again at a certain moment of time wishes to track the ball by applying PTZ commands. It is assumed that the user generates these PTZ commands by means of touching the (touch-) screen of the tablet PC or by making gestures which are detected by dedicated gesture sensors like structured light sensors such as Kinect, or accelerometer sensors available on the user device or as wearable devices etc or by means of video-based gesture recognition algorithms. Such PTZ command for selecting the spatial portion of the ultra high resolution video content including the ball and the player at the ball, or in other words PTZ commands for tracking the ball with the player in ball possession are transmitted by the spatial portion selection means SSM of the Client device CD towards the reception means RM of the selection device SD, optionally included in server S that receives the user navigation commands from said client device CD to determine a navigation trajectory through said ultra high resolution video content.

Hence, the user navigation command, such as a PTZ command, in view of a current location or starting point, i.e. the spatial portion of said ultra high resolution video content currently transmitted towards said client device CD, of the navigation command indicates a navigation selection trajectory, such as a path through e.g., a frame of, the ultra high resolution video content in direction of the navigation goal of a user of such client device envisions.

Subsequently or at the same time, the video saliency determination means SDM determines a local video saliency on the navigation selection trajectory by continuously analyzing the ultra high resolution video content on the navigation trajectory through the ultra high resolution video content.

In order to improve the navigation along the meant navigation selection trajectory, the ultra high resolution video content is analyzed for determining the local video saliency on this navigation selection trajectory where the local video saliency is a measure for the amount of detail present at the navigation selection trajectory in such video.

A low local video saliency, signifies a low amount of detail in the video, such as the blue sky, uniformly painted walls, road, etc. A moderate local video saliency in turn signifies a moderate amount of detail such as a statistically uniform texture but rough (high frequency content, e.g. vegetation, grass, tree's leaves, some texture patterns for carpets, curtains, roofs etc) and a high local video saliency finally signifies a high degree of video saliency such as either spatially salient or salient due to its motion; e.g. people, faces, soccer ball etc.

It is assumed that the user with his PTZ command is trying to track the ball, first browses through a spatial portion including blue air, towards the ball, which blue air does contain only few details and is evenly distributed. Hence, the saliency determination means SDM first analyzes the ultra high resolution video content on the navigation selection trajectory, i.e. the blue sky and based on the outcomes of the analyzing determines a low local video saliency on meant location of the navigation selection trajectory. Based on the determined low video saliency, of the blue sky on the navigation trajectory, the characteristics adaption means CAM adapts characteristics of the navigation selection trajectory in function of said local video saliency on said navigation selection trajectory. Hence based on the determined low video saliency, the characteristic of the navigation selection trajectory being the speed in this case is increased as the current portion of the navigation selection trajectory only contains little information, i.e. the blue air. The navigation trajectory hence may be traversed at an accelerated velocity due to the fact there is little information on the current traversed portion of the navigation selection trajectory.

Subsequently, it is assumed that the path of the ball touches down the ground at the soccer field and proceeds rolling over the grass. Now, the saliency determination means SDM further analyzes the ultra high resolution video content on the navigation selection trajectory at the current position, i.e. the spatial portion of said ultra high resolution video content, located on the selection navigation trajectory, being currently transmitted towards said client device CD and rendered at the current client device CD, and based on the outcomes of the analyzing determines an average local video saliency on the meant location of the navigation selection trajectory. Based on the determined average video saliency the characteristics adaption means CAM adapts the characteristics of the navigation selection trajectory in function of said local video saliency on said navigation selection trajectory. Hence based on the determined low video saliency, the characteristic of the navigation selection trajectory being the speed in this case is decreased back to a normal or average speed as the current portion of the navigation selection trajectory only contains an average amount of information at the current location on the trajectory, i.e. the grass with a structure comprising a moderate amount of detail, that is a statistically uniform texture but rough (being a high frequency content). The navigation trajectory hence may be traversed at a speed that is decelerated till an average velocity due to the fact there is an average amount of information on the current traversed portion of the navigation selection trajectory.

Alternatively, it is assumed that the user subsequently using PTZ command trying to track the ball, further browses through a spatial portion including the ball being surrounded by a plurality of soccer players, even of different teams, which scene and navigation trajectory through this meant scene comprises a high amount of information making it difficult to distinguish the right object in the scene being the ball with a player taking the control of the ball.

Hence, the saliency determination means SDM further analyzes the ultra high resolution video content at the current location on the navigation selection trajectory , i.e. the spatial portion of said ultra high resolution video content, on the selection navigation trajectory, currently transmitted towards said client device CD and currently be rendered at the client device CD, and based on the outcome of the analyzing further determines a high local video saliency on meant location of the navigation selection trajectory. Based on the determined high video saliency the characteristics adaption means CAM adapts characteristics of the navigation selection trajectory in function of said local video saliency on said navigation selection trajectory. Hence based on the determined high video saliency, the characteristic of the navigation selection trajectory being the speed in this case again is decelerated as the current portion of the navigation selection trajectory contains high amount information, i.e. a plurality of soccer players of different teams surrounding the ball. The navigation trajectory hence may be traversed at a decelerated velocity due to the fact there is a high amount of information on the current traversed portion of the navigation selection trajectory.

Hence, in this way, in function of the determined local video saliency the characteristics of the navigation selection trajectory may be adapted to better match the navigation goals of a user of the client device. In case there is much information present in the spatial portion of the ultra high resolution video content that is currently transmitted by the server S to the client device CD it is difficult for the user to decide whether the current spatial portion indeed contains the information the user is looking for. Hence the navigation speed over the navigation selection criterion is decelerated to enable the user to better decide whether or not the spatial portion indeed contains the information he/she is looking for.

The other way around, In case there is few information present in the spatial portion of the ultra high resolution video content that is currently transmitted by the server S to the client device CD it is not difficult for the user to decide whether the current spatial portion indeed contains the information the user is looking for as the image is more or less similar. Hence the navigation speed over the navigation selection criterion can be accelerated as the user immediately is aware the spatial portion does not contain the information the user is looking for.

Subsequently, the selection means SPSM, selects a spatial portion from said ultra high resolution video content, based on the current position on the navigation selection trajectory as handed over by the selection device SD where the spatial portion may be identified by the content's reference coordinates.

Hence, at first the selection means SPSM does interpret the i.e. the PTZ command received, i.e. the ball tracking command in view of the at least part of the ultra high resolution video content being transmitted from the server S towards the client device CD, which is the full - or a spatial portion of the ultra high resolution video content being transmitted from said server S towards the client device CD and presented at the screen of the client device CD. While taking into account the current view at the screen of the client device CD, the selection means SPSM applies the received PTZ command and applies the PTZ selection or tracking command at the full - or a spatial portion of the ultra high resolution video content being received and presented at the screen of the client device. A spatial portion indicated by means of the PTZ selection command is initially selected by the selecting means SPSM. As the selected portion, i.e. the ball with the player being in possession of the ball is very fast moving, possibly the selection is not yet optimum performed, i.e. the selection does include a part of the moving ball however the meant player is not visible within the selected spatial portion.

In case the user of the client device with the PTZ-selection command selects a spatial portion of the video content that includes - or is near to a portion of the ultra high resolution video content that is associated with a region of interest, e.g. the region of interest including the ball together with the player being in possession of the ball, the selection means SPSM directs the selection of the spatial portion in such manner that the spatial portion includes the meant region of interest including the ball together with the player being in possession of the ball.

The selection means SPSM, in turn generates a spatial portion of the ultra high resolution video content that is retrieved from a coupled video repository VR by means of the video content reception means VCRM, in correspondence with the meant region of interest including the ball together with the player being in possession of the ball.

Subsequently, the selection means SPSM outputs the spatial portion of the ultra high resolution video content, comprising the meant region of interest, where the meant region of interest includes the ball together with the player being in possession of the ball and is being forwarded to the Encoding means EM for encoding the spatial portion of the ultra high resolution video content into a format suitable for display at the client device CD.

In case of a tablet PC the encoded video format may be a broadcasting format such as H.264/AVC, H.265/HEVC, their scalable extensions, or VP8 or VP9 formats, or in case the client device CD is an IP connected television set may be a broadcasting format such as H.264/AVC, H.265/HEVC, or their scalable extensions, or VP8 or VP9 formats or any other suitable format.

It is to be noted that in an embodiment of the present invention the ultra high resolution video content may comprise 3-Dimensional video.

Finally the encoded spatial portion of the ultra high resolution video content including the ball together with the player being in possession of the ball is transmitted towards the client device decoding means DM that further hands over the portion of the ultra high resolution video content to means, of the client device, for display the portion of the ultra high resolution video content.

In an embodiment of the present invention, the navigation selection trajectory can be traversed at an adapted velocity that optimum suits the level of detail in the video at the analyzed location at the navigation selection trajectory through the video content.

The navigation trajectory may be traversed at a standard velocity but advantageously additionally in an accelerated velocity or at a decelerated velocity in the respective situation of a low local video saliency, i.e. in case relatively little change in video information such as a blue sky, uniformly painted walls, road, etc. on the navigation selection trajectory, or in case of relatively high local video saliency , i.e. very much change in video information such as such as objects either spatially salient or salient due to its motion like e.g. people, faces, soccer ball etc on the navigation selection trajectory.

Further, it is to be noted that although the embodiment describes a client-server architecture wherein the present invention is implemented and executed, this also could have been implemented and executed in a peer-to-peer architecture, cloud architecture, hardware architecture, and each other form in between.

It is to be noted that the selection device SD, alternatively may be included in a separate network element or may be included in another network element such as a core network element see Fig. 4, or could even be located at the client device, or happen to be located close the client device, see Fig. 3, or such as at a set-top-box. This means that in the last case, the local saliency determination may be performed at the client device rather than performing this determination at the server S. The adaptation of the command could then also happen on the device, the Server would then simply send the selection as requested.

It is to be noted that the characteristics adaption provided by the CAM, which modifies the navigation selection trajectory in function of said local video saliency on said navigation selection trajectory, actually modifies the values of the content's reference coordinates to be selected by the SPSM. This modification of reference coordinates can be compared to the reference coordinates of the previous selected portion of the video content on the navigation selection trajectory.

In the example of a navigation trajectory corresponding to a translation in reference coordinates (pan and/or tilt interaction), the reference coordinates of the selected portion at time (t) are obtained by adding an offset to the reference coordinates of the selected portion at time (t-1). The adaption of the characteristics based on the local saliency will therefore have as a consequence an increase or decrease of the offset to be added on reference coordinates depending on the local saliency.

In another example of a navigation trajectory corresponding to a uniform scaling in reference coordinates (zoom in or zoom out interaction), the reference coordinates of the selected portion at time (t) are obtained by adding four offsets to the reference coordinates of the corners of the selected portion at time (t-1), resulting in a selection with an unchanged shape but with an offset to be added to the area with respect to the content's reference coordinate system. The adaption of the characteristics based on the local saliency will therefore have as a consequence an increase or decrease of the offsets to be added on the reference coordinates of the corners of the selection depending on the local saliency and subsequently an increase or decrease of the offset to be added to the area of the selection respectively.

It is further to be noted that earlier navigation selection commands, i.e. interaction commands at the device, may be evaluated for determining whether such user is performing chaotic interactions (like very rapid opposite interactions like a trembling finger at the touch screen), in which case the speed could be adapted by reducing the amplitude of the interactions by making use of the Kalman filter to reduce the effect of the series of chaotic navigation selection commands.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method for navigating in ultra high resolution video content under control of a user navigation command originating from a client device (CD), at least portions of said ultra high resolution video content being transmitted from a server (S) towards said client device (CD), said method comprising the steps of:
- receiving a user navigation command, said user navigation command indicating a navigation trajectory through said ultra high resolution video content; and
- determining a local video saliency on said navigation selection trajectory by analyzing said ultra high resolution video content on said navigation trajectory through said ultra high resolution video content; and
- adapting characteristics of said navigation selection trajectory in function of said local video saliency on said navigation selection trajectory.

2. A method for navigating in ultra high resolution video content according to claim 1, wherein in case of a low local video saliency on said navigation trajectory through said ultra high resolution video content, a navigation speed is increased, in case of a high local video saliency on said navigation trajectory through said ultra high resolution video content a navigation speed is decreased.

3. A method for navigating in ultra high resolution video content according to claim 1, wherein said characteristics of said navigation selection trajectory comprise navigation speed and direction.

4. A method for navigating in ultra high resolution video content according to claim 1, wherein said analyzing said ultra high resolution video content on said navigation trajectory through said ultra high resolution video content comprises counting edge transitions on said navigation trajectory.

5. A method for navigating in ultra high resolution video content according to claim 1, wherein said analyzing said ultra high resolution video content on said navigation trajectory through said ultra high resolution video content comprises determining transitions or the variance of luminance content on said navigation trajectory.

6. A method according to claim 1, wherein said navigation selection command contains a Pan-Tilt- Zoom command.

7. A method according to claim 1, wherein said navigation selection command contains content's reference coordinates.

8. System for navigating in ultra high resolution video content under control of a user navigation command originating from a client device (CD), at least portions of said ultra high resolution video content being transmitted from a server (S) towards said client device (CD), wherein said system comprises:
- a reception means, configured to receive said user navigation command, said user navigation command indicating a navigation trajectory through said ultra high resolution video content ; and
- a video saliency determination means, configured to determine a local video saliency on said navigation selection trajectory by analyzing said ultra high resolution video content on said navigation trajectory through said ultra high resolution video content; and
- a characteristics adaption means, configured to adapt characteristics of said navigation selection trajectory in function of said local video saliency on said navigation selection trajectory.

9. Selection Device (SD) for use in a system according to claim 7, wherein said selection device (SD) is configured to support navigating in ultra high resolution video content under control of said user navigation command originating from said client device (CD), said selection device (SD) comprises:
- Reception means (RM), configured to receive said user navigation command, said user navigation command indicating a navigation trajectory through said ultra high resolution video content; and
- Video saliency determination means (SDM), configured to determine a local video saliency on said navigation selection trajectory by analyzing said ultra high resolution video content on said navigation trajectory through said ultra high resolution video content; and
- Characteristics adaption means (CAM), configured to adapt characteristics of said navigation selection trajectory in function of said local video saliency on said navigation selection trajectory.

10. Server for transmitting at least portions of ultra high resolution video content towards a client device (CD), for use in a system according to claim 7, wherein said server (S) comprises a selection device (SD) according to claim 8.

11. Network element for use in a system according to claim 7, wherein said network element is coupled to said server (S) and or said client device (CD) wherein said network element comprises a selection device (SD) according to claim 8.

12. Computer program product comprising software adapted to perform the method steps according to any of claim 1 to 7 when executed on a data processing apparatus.
